Europäisches Patentamt

**European Patent Office**

Office européen des brevets

(11) Publication number: **0 086 848**
**A1**

(12) # EUROPEAN PATENT APPLICATION
published in accordance with Art. 158(3) EPC

(21) Application number: **82902552.7**

(22) Date of filing: **31.08.82**

(51) Int. Cl.³: **G 05 B 19/42**

Data of the international application taken as a basis:

(86) International application number:
**PCT/JP82/00348**

(87) International publication number:
**WO83/00941 (17.03.83 83/07)**

(30) Priority: **31.08.81 JP 136744/81**

(43) Date of publication of application:
**31.08.83 Bulletin 83/35**

(84) Designated Contracting States:
**DE FR GB**

(71) Applicant: **Fanuc Ltd
5-1, Asahigaoka, 3-chome
Hino-shi, Tokyo 191(JP)**

(72) Inventor: **INABA, Hajimu
5-3-16, Asahigaoka
Hino-shi Tokyo 191(JP)**

(72) Inventor: **SAKAKIBARA, Shinsuke
Mezon-Izumi 101 1-23-3, Higashiizumi
Komae-shi Tokyo 201(JP)**

(74) Representative: **Billington, Lawrence Emlyn et al,
HASELTINE LAKE & CO Hazlitt House 28 Southampton
Buildings Chancery Lane
London WC2A 1AT(GB)**

(54) **ROBOT OPERATION TEACHING METHOD.**

(57) A robot operation teaching method which can instruct with fewer mistakes in a short time. When a basic operating pattern program is input from a teaching operation board (TB) or a keyboard (KBD), a data processing unit (DPU) continuously produces a pre-stored basic operating pattern from a basic operating pattern memory (BPM), and points to be taught are flashed on a display unit (CRT). The working conditions are then input at this point, distribution pulses (RP, ZP, QP) are generated from a pulse distributor (PDC) using the teaching operation board, a robot is positioned at the predetermined position, and its coordinate values are stored. After the teaching of all the points is finished, a series of robot instruction data is drawn up under the control of the automatic production program stored in the program memory (CPM).

EP 0 086 848 A1

./...

# Fig. 5

Fig. 5

BPM — Basic Operating Pattern Memory

KBD — Key board

CRT — Display Device

DM — Robot Command Data Storage Area

RCM

Data Processing Unit
- Processor — CPU
- Program Memory — CPM

APM — Actual Position Storage Area

VDM — Variable Storage Area

PPM — Point Storage Area

DPU

JFC

PDC — Pulse Distributor

RP
ZP
θP

TB — Teaching Box

-1-

DESCRIPTION

ROBOT MOTION TEACHING METHOD

## Technical Field

This invention relates to a method of teaching motion to a robot and, more particularly, to a teaching method through which robot command data can be taught in a simple manner.

## Background Art

With a play-back type industrial robot, service operations are taught beforehand from a teaching box, and the taught subject matter (referred to as robot command data hereinafter) is stored in a data memory within a control unit. Whenever a request for a service arrives from the machine tool side, a series of the above robot command data is read out of the memory sequentially, and the robot responds by servicing the machine in repeated fashion.

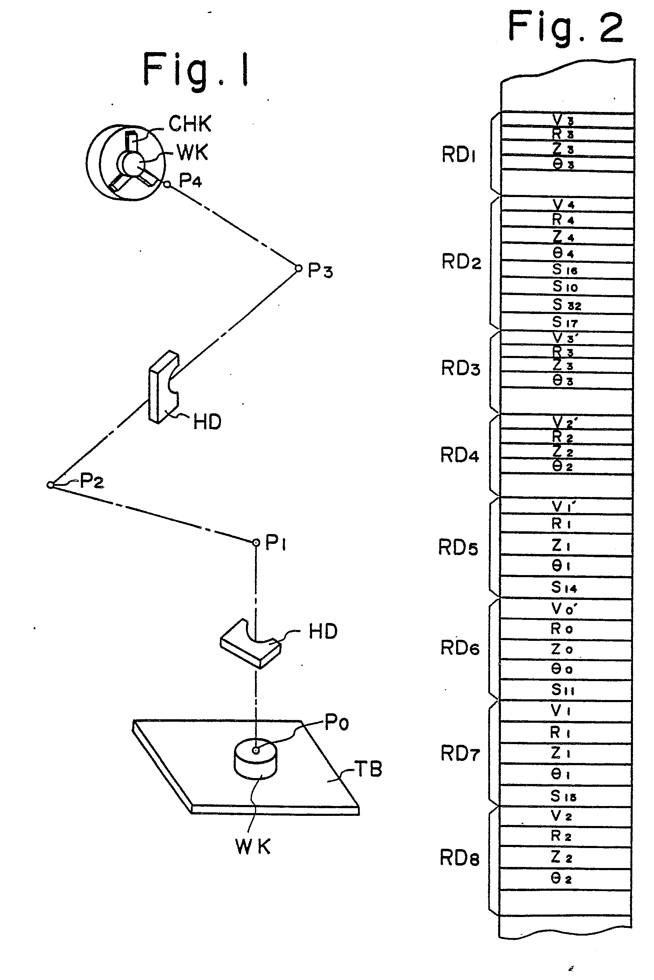

The robot command data comprises position information regarding a point at which a service is to be performed, speed of movement up to the point, and service codes for specifying control of the hand at the point as well as the exchange of signals with the machine tool side. In general, the teaching operation mentioned above proceeds in the following order: (1) set the data memory address at which an item of robot command data is to be stored; (2) execute positioning by a jog-feed (manual feed) up to a predetermined point; (3) set the position information regarding the point, as well as the magnitude of the speed command specifying the speed of movement up to the point; and 4) set the robot service codes. A series of robot operations for a machine tool is taught by repeating the sequence (1) through (4). As shown in Fig. 1, therefore, to move a single hand HD along a path from point to point in the following manner: $P2 \longrightarrow P3 \longrightarrow P4 \longrightarrow P3 \longrightarrow P2 \longrightarrow P1 \longrightarrow Po \longrightarrow P1 \longrightarrow P2$, and to cause the hand to grip a completed workpiece WK at point P4 and unload it from a chuck CHK, and further to cause the hand to set the completed workpiece WK upon a table TB at point Po, a series of command data items RD1, RD2, RD3 ... are stored in the data memory of the robot control unit in the manner shown in Fig. 2, where the coordinates of each point $Pi$ ($i=0$, 1, 2,...) are expressed as polar coordinates $(Ri, Zi, \theta i)$, where the speed of movement from point $Pi$ to point $Pi+1$ is $Vi+1$, the speed of movement from point $Pi+1$ to point $Pi+1$ to $Pi$ is $Vi'$, and where the following are service codes having the indicated functions: S10 for fully closing the fingers of the hand, S11 for fully opening the fingers of the hand, S14 for rotating the hand $90°$ in the counter-clockwise direction, S15 for rotating the hand $90°$ in the clockwise direction, S16 for thrusting the hand forward, S17 for retracting the hand, and S32 for fully opening the jaws of the chuck.

According to the conventional teaching method as described earlier, the teaching box must be used to (1) set the data memory address at which each item of robot command data is stored, (2) execute positioning by a jog-feed up to a predetermined point, (3) set the position information regarding the point, as well as the speed of movement up to the point, and 4) set the robot service codes. These steps must be performed for each and every point. The teaching operation is therefore both troublesome and time consuming and invites teaching errors.

Accordingly, an object of the present invention is to provide a teaching method through which even a beginner can teach robot motion easily without error through a simple procedure and in a short period of time.

DISCLOSURE OF THE INVENTION

Disclosed is a method of teaching the motion of a robot which operates based on a series of robot command data, having steps of registering basic robot operating patterns, specifying a robot operating pattern by combining one or more of the basic operating patterns, entering working conditions, positioning a hand sequentially at each point on the operating pattern by a manual feed to teach the position of each point, and creating a series of robot command data using the operating pattern, working conditions and position information regarding each point. In accordance with this teaching method, one need only enter a combination of basic patterns and working conditions and teach the

-4-

points located on the basic pattern. This makes it possible to provide a teaching method in which teaching can be performed simply, quickly and with little chance of teaching errors. In particular, according to the invention, it is unnecessary to teach the same point two or three times or more, as is required in the prior art, and it is also unnecessary to enter service codes and the like. Teaching time can therefore be shortened markedly to enhance robot operating efficiency.

## BRIEF DESCRIPTION OF THE DRAWINGS

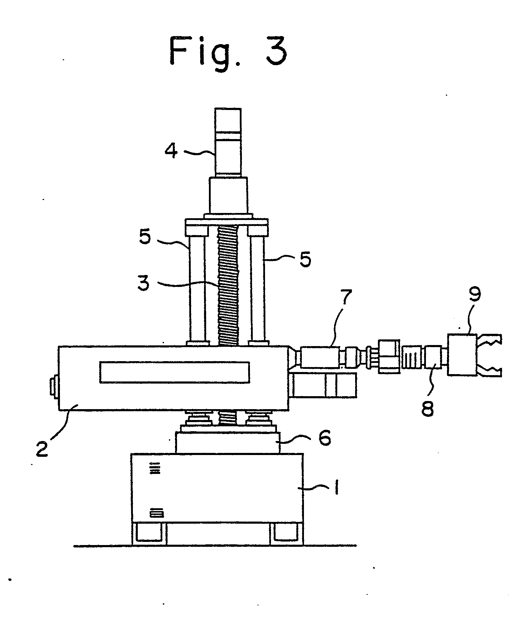

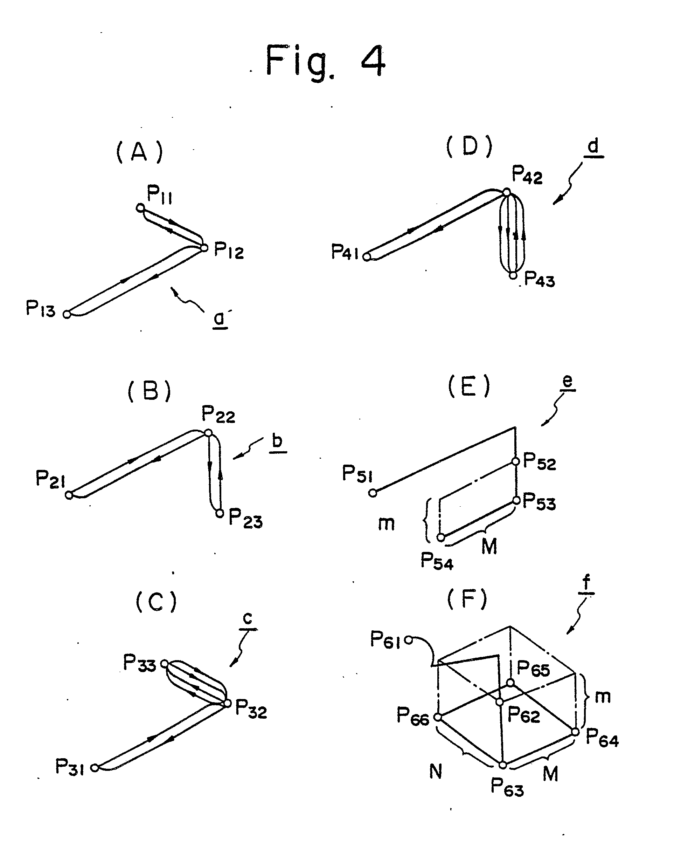

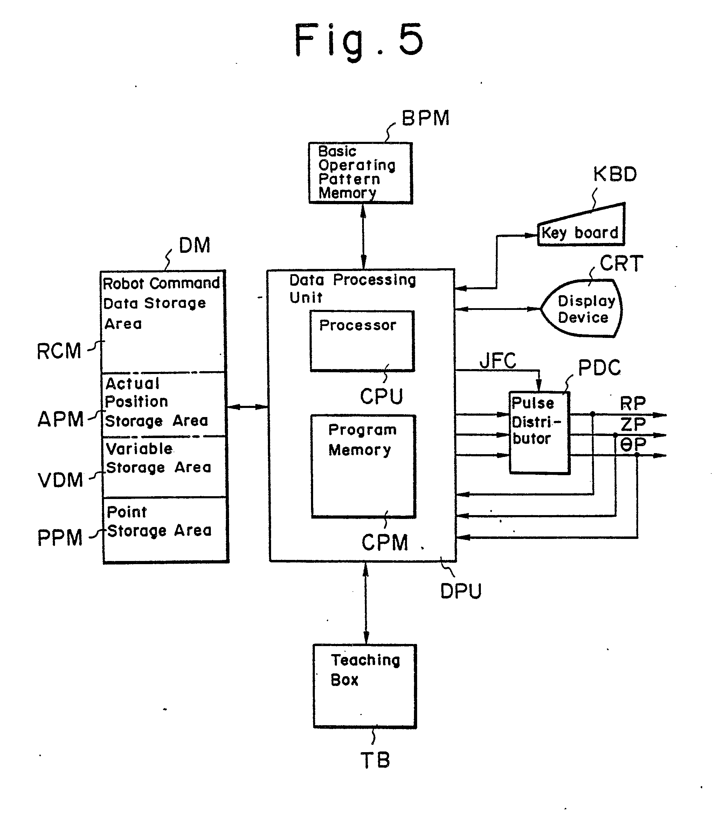

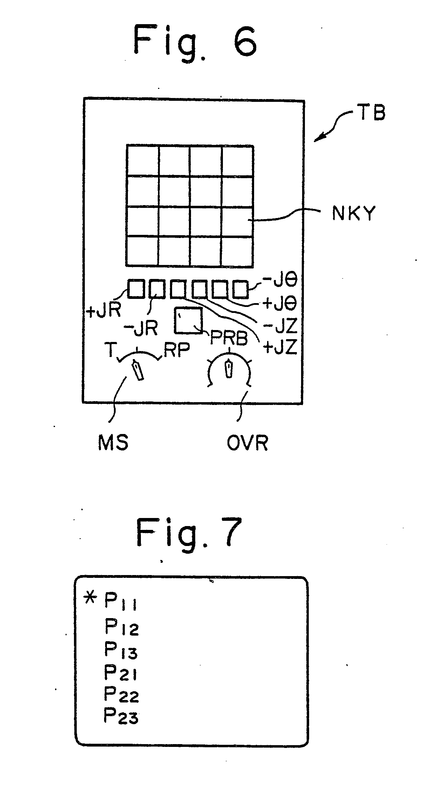

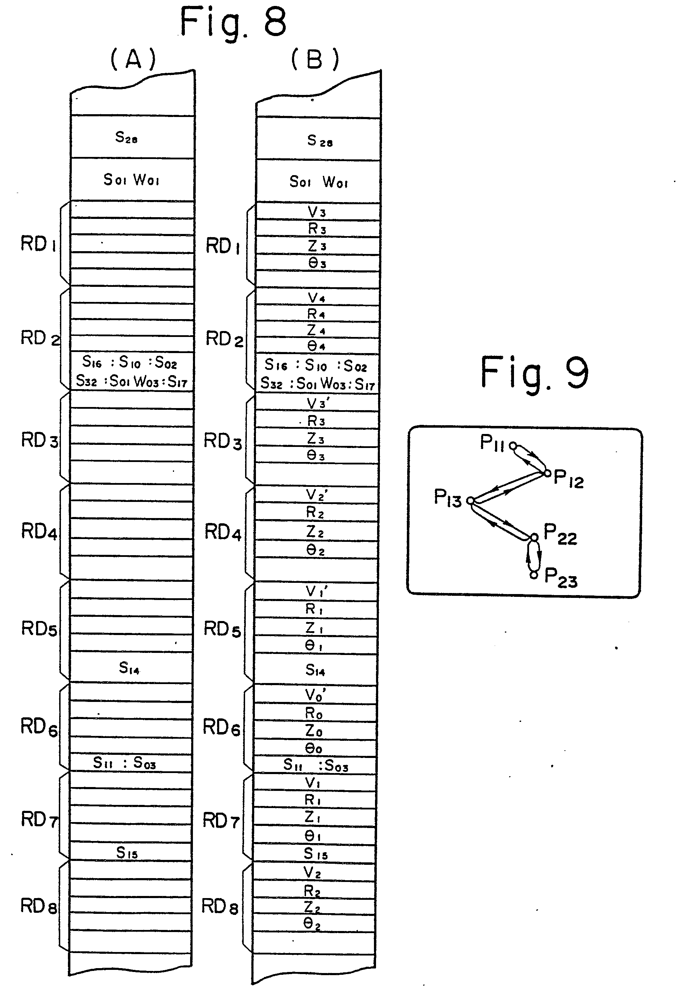

Fig. 1 is an explanatory view of a conventional teaching method; Fig. 2 is an explanatory view of robot command data; Fig. 3 is a front elevation of an industrial robot to which the teaching method of the present invention can be applied; Fig. 4 is an explanatory view of basic robot operating patterns; Fig. 5 is a block diagram of a robot control unit for practicing the teaching method of the present invention; Fig. 6 is an explanatory view of the principal portion of a teaching box; Figs. 7 and 9 are explanatory views showing examples of displays on a CRT; and Fig. 8 is an explanatory view for describing a process through which robot command data is created according to the present invention.

## BEST MODE FOR CARRYING OUT THE INVENTION

Fig. 3 is a front elevation of an industrial robot capable of being controlled by robot command data created by the teaching method of the present invention. In the Figure, numeral 1 denotes a base, 2 the robot body, 3 a screw shaft for moving the robot body 2 up and down, 4 a motor for turning the screw shaft, 5 guide rods for guiding the vertical movement of the robot body 2, 6 a rotary pedestal for rotating the robot body 2, 7 an arm extended and retracted longitudinally, 8 a wrist mechanism, and 9 a workpiece gripping device (hand).

An operating pattern through which the foregoing robot services a machine tool can be expressed by a combination of basic operating patterns. For example, basic operating patterns for loading and unloading workpieces relative to a machine tool are illustrated in Fig. 4. Fig. 4(A) shows a basic pattern for a single hand for loading an unmachined workpiece into the chuck of a lathe or for unloading a completed workpiece from the chuck. Specifically, for unloading a completed workpiece from a chuck, the basic operating pattern of Fig. 4(A) indicates operations of moving the hand from a point P13 to a point P12, positioning the hand at a point P11 after changing direction at point P12, subsequently thrusting the hand forward at point P11, then closing the fingers to grip the completed workpiece, opening the chuck followed by retracting the hand, and finally bringing the hand to point P11 via point P12. In loading an unmachined workpiece into the chuck, the basic pattern of Fig. 4(A) indicates operations of positioning the hand, which is gripping the unmachined workpiece, from point P13 to point P11 via point P12, thrusting the hand forward at said point, then closing the chuck to load the unmachined workpiece into the chuck, subsequently opening the fingers of the hand and retracting the hand, and again bringing the hand to point P11 via point P12. Fig. 4(B) shows a pattern for a single hand for picking up an unmachined workpiece from a workpiece table, or for placing a completed workpiece on the workpiece table. In a case where the machine tool is a milling machine or machining center, the pattern of Fig. 4(B) is a basic operating pattern for unloading a completed workpiece from a jig, or for loading an unmachined workpiece on the jig, by means of a single hand.

Accordingly, for the case where an unmachine workpiece is to be picked up from the workpiece table, the basic pattern of Fig. 4(B) indicates operations of moving the single hand from a point P21 to a point P22, rotating the single hand by 90° at said point, then positioning the hand at a point P23, fully closing the fingers of the hand to grip an unmachined workpiece, subsequently rotating the the single hand by -90° at point P22, and bringing the hand to point P21. When placing a completed workpiece on the workpiece table, the basic pattern of Fig. 4(B) indicates operations of moving the single hand, which is gripping the workpiece, from point P21 to point P22, rotating the single hand by 90° at said point, then changing direction and positioning the hand at point P23, fully opening the fingers of the hand to place the completed workpiece on the workpiece table, subsequently rotating the single hand by $-90°$ at point P22, and bringing the hand to point P21.

Fig. 4(C) shows a basic pattern for loading and unloading workpieces by means of a double hand. Specifically, this is a basic pattern, having a starting point P31, for unloading a completed workpiece from the chuck of a lathe with one hand at a point P33, retracting the double hand to a point P32 and subsequently rotating the hand by $180°$, then again positioning the double hand at the point P33, subsequently loading an unmachined workpiece, which is being gripped by the other hand, into the chuck, and returning the double hand to point P31 via point P32. Fig. 4(D) shows a basic pattern for placing a completed workpiece on the workpiece table by the double hand, and subsequently rotating the double hand by $180°$ to pick up an unmachined workpiece from the workpiece table. In a case where the machine tool is a milling machine or machining center, the basic pattern of Fig. 4(D) is a pattern indicating the loading and unloading of workpieces, relative to a jig, by means of the double hand. Fig. 4(E) shows a basic operating pattern for palletizing by stacking a row M of completed workpieces to a height of $\underline{m}$ levels, or for unstacking a row M of unmachined workpieces piled up to a height of $\underline{m}$ levels. Fig. 4(F) shows a basic operating pattern

-8-

for palletizing by stacking completed workpieces to a height of m levels at each point in an M-row by N-column array, or for unstacking unmachined workpieces, piled up to a height of m levels, at each point in the M-row by N-column array.

A robot operating pattern can be specified by combining the basic operating patterns of Figs. 4(A) through 4(F). For example, if we let a, b, c...,f represent the basic patterns of Figs. 4(A), 4(B),... 4(F), respectively, then an operating pattern for loading and unloading workpieces by a single hand will be specified by a, b, and that for loading and unloading workpieces by a double hand will be specified by c, d.

It is already known at which points of a fundamental operating pattern the wrist and hand are to be controlled (such as control for opening and closing the fingers, for swiveling the hand clockwise and counter-clockwise and for thrusting the hand forward and retracting the hand) and at which points the chuck is opened and closed. It is also known at which points of a basic operating pattern such states as completed machine tool actions are to be verified (such as verifying opening and closing of a cover on a lathe, opening and closing of the chuck, opening and closing of a jig on a milling machine, and stopping of spindle rotation).

Accordingly, basic operating patterns which include robot operations at each point in addition to patterns defining hand path, are registered in the robot control unit in advance. Then, all data necessary for teaching robot motion are entered by (1) specifying a robot operating pattern in the form of a combination of the basic operating patterns for, e.g., loading and unloading workpieces, (2) entering working conditions such as whether a machine tool to be serviced is of a lathe type or machining center type, whether the hand is a single or double hand (i.e., hand type), outer diameter of the workpiece, and number of rows, columns and levels for palletizing. If a program for automatically creating robot command data is stored in the robot control unit beforehand, then the robot command data will be created automatically merely by entering the data mentioned in items (1) through (3) hereinabove.

Fig. 5 is a block diagram of a robot control unit for practicing the teaching method of the present invention, Fig. 6 is an explanatory view of the principal portion of a teaching box, Fig. 7 is an explanatory view showing an example of a display on a CRT, and Fig. 8 is an explanatory view for describing a process through which robot command data is created.

In Fig. 5, DPU represents a data processing unit having a processor CPU, and a read-only program memory CPM for storing a robot command data automatic creation program (hereafter referred to as an automatic creation program), as well as a control program for repeat control. TB represents a teaching box. The teaching box TB, as shown in Fig. 6, has a mode selection switch MS for selecting, e.g., the display mode (T), repeat (playback) operating mode (RP), an override switch OVR for overriding jog feed speed and feed speed when the robot is running automatically, jog buttons +JR, -JR, +JZ, -JZ, +J$\theta$ and -J$\theta$ for jog-feeding the hand in the positive and negative directions along the R, Z and $\theta$ axes, respectively, a position record button PRB for setting an actual position, stored in a data memory, as the position of any point, and numeric keys NKY. Returning to Fig. 5, BPM denotes a basic pattern memory for storing basic operating patterns, and DM represents a data memory having, e.g., a robot command data storage area RCM for storing a series of created robot command data, an actual position storage area APM for storing the actual position of the hand (Rm, Zm, $\theta$m) along the R, Z and $\theta$ axes, a variable storage area VDM for storing data indicative of a combination of basic operating patterns, and a point storage area PPM for storing the positions of various points on an operating pattern. CRT designates a display device which, as shown in Fig. 7, presents a display of symbols specifying various points when a combination of basic operating patterns has been entered. In teaching the position of each point, the symbol indicating the point whose position is to be taught next is caused to blink or is displayed with an asterisk (*) preceding it. When the position of each point has been taught, the coordinates of said position will appear. KBD denotes a keyboard for entering various working conditions. It should be noted that the display device CRT and keyboard KBD can be provided on the teaching box TB. PDC represents a known pulse distributor.

The operation of Fig. 5 will be described next.

First, the mode selection switch MS on the teaching box TB is set to the display mode T. A basic operation pattern combination is now entered by operating the numeric keys NKY on the teaching box or the keys on the keyboard KBD. For example, in a case where the robot is to unload a completed workpiece from a chuck and subsequently place the completed workpiece on a workpiece table (refer to Fig. 1), the basic operating pattern combination will be "a, b"; hence, a, b are entered from the keyboard KBD.

When the basic operating pattern combination is entered, the data processing unit DPU stores the combination in the variable storage area VDM of the data memory, reads the basic operating patterns a, b out of the basic operating pattern memory BPM in sequential fashion, causes the symbols for each point on the basic operating pattern to be displayed by the display device CRT, and causes the display device to blink the point (say P11) whose position is to be taught.

0086848

-12-

Next, working conditions, such as whether the machine tool to be serviced is of the lathe or machining center type, are entered from the keyboard KBD, and the conditions are stored in the variable storage area VDM of the data memory DM. If the machine tool is of the lathe type, then the data processing unit DPU will create the robot command data shown in Fig. 8(A), and store the data in the robot command data storage area RCM, based on the already entered basic operating patterns and working conditions (e.g, that the machine tool is of the lathe type). In Fig. 8, S28 represents a service code for opening the cover of the lathe, and Sol represents an operation verification service code for verifying the operation specified by the numerical value which follows the alphabetic character W. When the operation specified by this numerical value is incomplete, robot playback activities (service activities) are suspended until the completion of said operation. Wol denotes a code for checking whether the cover has been opened, So2 is a service code for checking whether the hand is fully closed, SolWo3 is a check code for checking whether the chuck is fully open, and So3 is a service code for checking whether the hand is fully open.

Thereafter, when a jog button on the teaching box is pressed, the data processing unit DPU delivers a jog feed command JFC, which includes the axes of feed and the sign, to the pulse distributor PDC. As a result, the pulse distributor PDC generates distributed pulses RP, ZP, $\theta$P, of a predetermined frequency, for the commanded axes (R, Z and $\theta$ axes) to rotate a servomotor through servo circuitry (not shown), whereby the hand is moved toward the actual position of the point P11 blinking on the CRT. At the same time, the distributed pulses enter the data processing unit DPU. The latter performs the computations $Rm\pm1 \longrightarrow Rm$, $Zm\pm1 \longrightarrow Zm$, $\theta m\pm1 \longrightarrow \theta m$ each time the distributed pulses Rp, Zp, $\theta$p are generated. Accordingly, the actual position Rm, Zm, $\theta$m in the actual position storage area APM is updated by being incremented or decremented in accordance with the direction of movement. When the hand arrives at the actual position of the point P11 blinking on the CRT, therefore, the coordinates of said position will come to be stored in the actual position storage area APM.

After the hand arrives at the desired position, the symbol P11 blinking on the CRT is entered and the position record button PRB on the teaching box TP is pressed. When this is performed, the actual position of the point P11 is read out of the actual position storage area APM and is displayed on the CRT, and the symbol of the point (P12, for example) to be taught next begins to blink. At the same time, the coordinates of the point P11 are stored in the point storage area PPM. This ends the teaching operation for the point P11.

Thenceforth, the foregoing teaching operation is performed for all points on the operating pattern. Upon conclusion of this teaching operation, a series of robot command data items is created, as shown in Fig. 8(B), under the control of the automatic creation program stored in the program memory CPM, and these items of data are stored in the robot command data storage area RCM of the data memory DM. This completes the teaching operation.

In accordance with the present invention, one need only enter a combination of basic patterns and working conditions and teach the points located on the basic pattern. This makes it possible to provide a teaching method in which teaching can be performed simply, quickly and with little chance of teaching errors. In particular, according to the invention, it is unnecessary to teach the same point two or three times or more, as is required in the prior art, and it is also unnecessary to enter service codes and the like. Teaching time can therefore be shortened markedly to enhance robot operating efficiency.

In the foregoing description, only the symbols of various points are displayed on the CRT. However, as shown in Fig. 9, it is possible to adopt an arrangement wherein a robot operating pattern, with symbols attached to the various points, is displayed on the CRT, with the point that is to be entered next being made to blink. Adopting such an arrangement facilitates teaching even further so that teaching errors become even less likely. The present invention is not limited to the illustrated embodiment but can be modified in various ways within the scope thereof as defined in the appended claims.

CLAIMS:

1.  In a method of teaching a robot which operates based on a series of robot command data, a method of teaching robot motion characterized by having a step of registering basic robot operating patterns, a step of specifying a robot operating pattern by combining one or more of said basic operating patterns, a step of entering working conditions, a step of positioning a hand sequentially at each point on said operating pattern by a manual feed to teach the position of each point, and a step of creating a series of robot command data using said operating pattern, working conditions and position information regarding each point.

2.  A method of teaching robot motion according to claim 1, chararacterized by having a step of appending a symbol to each point on said operating pattern, displaying all symbols on a CRT, and automatically designating the symbol of a point that is to be taught next.

3.  A method of teaching robot motion according to claim 2, chararacterized by blinking the symbol of the point to be taught next.

4.  A method of teaching robot motion according to claim 1, chararacterized by having a step of appending a symbol to each point on said operating pattern, and displaying said operating pattern on a CRT.

5.  A method of teaching robot motion according to claim 4, chararacterized by blinking the symbol of the point to be taught next.

0086848

# Fig. 1

CHK
WK
P4
P3
HD
P2
P1
HD
P0
TB
WK

# Fig. 2

| | |
|---|---|
| RD1 | $V_3$ $R_3$ $Z_3$ $\theta_3$ |
| RD2 | $V_4$ $R_4$ $Z_4$ $\theta_4$ $S_{16}$ $S_{10}$ $S_{32}$ $S_{17}$ |
| RD3 | $V_3'$ $R_3$ $Z_3$ $\theta_3$ |
| RD4 | $V_2'$ $R_2$ $Z_2$ $\theta_2$ |
| RD5 | $V_1'$ $R_1$ $Z_1$ $\theta_1$ $S_{14}$ |
| RD6 | $V_0'$ $R_0$ $Z_0$ $\theta_0$ $S_{11}$ |
| RD7 | $V_1$ $R_1$ $Z_1$ $\theta_1$ $S_{15}$ |
| RD8 | $V_2$ $R_2$ $Z_2$ $\theta_2$ |

2

# Fig. 3

# Fig. 4

(A)

(B)

(C)

(D)

(E)

(F)

# Fig. 5

# Fig. 6

TB

NKY

+JR

−JR

−Jθ

+Jθ

−JZ

+JZ

PRB

T

RP

MS

OVR

# Fig. 7

* $P_{11}$
$P_{12}$
$P_{13}$
$P_{21}$
$P_{22}$
$P_{23}$

# Fig. 8

(A)

$S_{28}$

$S_{01}$ $W_{01}$

RD$_1$

RD$_2$

$S_{16}$ : $S_{10}$ : $S_{02}$
$S_{32}$ : $S_{01}$ $W_{03}$ : $S_{17}$

RD$_3$

RD$_4$

RD$_5$

$S_{14}$

RD$_6$

$S_{11}$ : $S_{03}$

RD$_7$

$S_{15}$

RD$_8$

(B)

$S_{28}$

$S_{01}$ $W_{01}$

RD$_1$
| $V_3$ |
| $R_3$ |
| $Z_3$ |
| $\Theta_3$ |

RD$_2$
| $V_4$ |
| $R_4$ |
| $Z_4$ |
| $\Theta_4$ |

$S_{16}$ : $S_{10}$ : $S_{02}$
$S_{32}$ : $S_{01}$ $W_{03}$ : $S_{17}$

RD$_3$
| $V_3'$ |
| $R_3$ |
| $Z_3$ |
| $\Theta_3$ |

RD$_4$
| $V_2'$ |
| $R_2$ |
| $Z_2$ |
| $\Theta_2$ |

RD$_5$
| $V_1'$ |
| $R_1$ |
| $Z_1$ |
| $\Theta_1$ |

$S_{14}$

RD$_6$
| $V_0'$ |
| $R_0$ |
| $Z_0$ |
| $\Theta_0$ |

$S_{11}$ : $S_{03}$

RD$_7$
| $V_1$ |
| $R_1$ |
| $Z_1$ |
| $\Theta_1$ |
| $S_{15}$ |

RD$_8$
| $V_2$ |
| $R_2$ |
| $Z_2$ |
| $\Theta_2$ |

# Fig. 9

$P_{11}$
$P_{12}$
$P_{13}$
$P_{22}$
$P_{23}$

# INTERNATIONAL SEARCH REPORT

International Application No.    **0086848**

## I. CLASSIFICATION OF SUBJECT MATTER (if several classification symbols apply, indicate all) ³

According to International Patent Classification (IPC) or to both National Classification and IPC

Int. Cl.³   G05B 19/ 42

## II. FIELDS SEARCHED

### Minimum Documentation Searched ⁴

| Classification System | Classification Symbols |
|---|---|
| I P C | G05B 19/42, 19/18 |

| | Documentation Searched other than Minimum Documentation to the Extent that such Documents are Included in the Fields Searched ⁵ |
|---|---|
| | Jitsuyo Shinan Koho    1926 – 1982 |
| | Kokai Jitsuyo Shinan Koho 1971 – 1982 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| Y | JP, A, 55-42578 (Takagi Katsumi) <br> 2. May. 1980 (02.05.80) | 1 – 5 |
| Y | JP, A, 49-96451 (Mitsubishi Heavy Industries, Ltd.) <br> 12. September. 1974 (12.09.74) | 1 – 5 |
| Y | JP, A, 56-54516 (Mitsubishi Heavy Industries, Ltd.) <br> 14. May. 1981 (14.05.81) | 1 – 5 |

\* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ³ |
|---|---|
| November 11, 1982 (11.11.82) | November 22, 1982 (22.11.82) |

| International Searching Authority ¹ | Signature of Authorized Officer ²⁰ |
|---|---|
| Japanese Patent Office | |

Form PCT/ISA/210 (second sheet) (October 1981)